# EUROPEAN PATENT SPECIFICATION

(11) **EP 4 272 559 B1**
(45) Date of publication and mention of the grant of the patent: **31.12.2025**
(21) Application number: 23169183.3
(22) Date of filing: 21.04.2023
(51) Int. Cl.: A21C 11/08

(54) **A MACHINE FOR FORMING A FOOD PRODUCT, PREFERABLY A BISCUIT**
MASCHINE ZUR HERSTELLUNG EINES NAHRUNGSMITTELS, VORZUGSWEISE EINES KEKSES
MACHINE POUR FORMER UN PRODUIT ALIMENTAIRE, DE PRÉFÉRENCE UN BISCUIT

(30) Priority: 02.05.2022 IT 202200008819
(43) Date of publication of application: 08.11.2023
(73) Proprietor: ING. POLIN & C. S.p.A., 37135 Verona (IT)
(72) Inventor: GIARDINI, Luca, 37135 VERONA (IT)
(74) Representative: Anselmi, Davide

(56) References cited:
- EP-A2- 3 599 289
- CA-A- 368 591
- CN-U- 206 403 031
- US-A- 2 130 887

## Description

### Technical field

The present invention relates to a machine for forming a food product, preferably a biscuit.

Therefore, the present invention has a wide field of application in the technical sector of machinery for processing and forming semi-processed food products and, more in particular, in the bakery sector.

Even more preferably, the present invention applies both to rotary machines and to rotary moulders for forming biscuits on industrial lines.

### Prior art

Such machinery generally comprises a moulding roller, which is activated on the semi-processed food product to give it a predetermined geometry, and a conveyor belt configured to transport the semi-processed product treated by the moulding roller towards an oven for baking. Some examples of these machines are included in documents US 2 130 887, CA 368 591 and CN 206 403 031 U.

Furthermore, the aforesaid machines comprise a pressure roller (also defined in the sector as a "rubberised roller" due to its elastically deformable external surface) rotating in the opposite direction to said moulding roller and operatively connected thereto in order to promote the shaping of the semi-processed food product.

In particular, the conveyor belt is wound onto the pressure roller so that the pressure roller is active on an inner surface thereof and the moulding roller is active on an external surface thereof.

It is underlined that, because of the strict tolerances at stake, the conveyor belt does not usually have any seams and is, thus, seamless.

Preferably, the belt is made of natural fibre (made by weaving) and therefore has a "weft" typical of woven fabrics. The pressure of the rubberised roller ensures that the dough contained in the moulds of the moulding roller penetrates into the weft of the belt. Therefore, this "weave" acts as an extractor as soon as the belt is detached from the tangency with the moulding roller. In fact the shaped biscuits remain on the belt and proceed towards the baking cycle.

Disadvantageously, the severe stresses to which the conveyor belt is subjected during the machine operating steps and the natural intrinsic fragility of the belt itself (made of natural fibre) result in the need for frequent replacements of the conveyor belt itself.

These replacements imply temporary downtime of the machine and, thus, limit the productivity of the system.

Further, the need for a seamless conveyor belt increases the length and the risk of such operations.

In fact, the conveyor belt replacement operations require the cutting of the conveyor belt to be replaced, so as to remove the belt from the aforesaid rollers, and a sequential removal of the return and moulding rollers of the machine frame.

In particular, the removal of the pressure roller is particularly challenging as the latter is usually very heavy and bulky, therefore the operators must strive to find a manual solution for extracting the roller and re-inserting it once the belt has been replaced (and this cannot be cut). For example, the pressure roller is usually connected to a hoist which enables it to be lifted and thus removed from the footprint of the frame. Subsequently the pressure roller is disconnected from the hoist so as to enable its insertion in the new conveyor belt just replaced. Finally, the pressure roller is connected to the hoist again and placed back on the frame; simultaneously or in subsequent steps the remaining rollers are introduced into the conveyor belt.

Therefore, the operations for replacing the conveyor belt require the constant presence of specialised personnel which results in an increase in costs as well as specific training for them.

### Objects of the present invention

In this context, the technical task underpinning the present invention is to provide a machine for forming a food product, preferably a biscuit, which obviates the drawbacks in the prior art as described above.

In particular, an object of the present invention is to provide a machine for forming a food product, preferably a biscuit, which guarantees increased efficiency of the production cycle.

A further object of the present invention is to provide a machine for forming a food product, preferably a biscuit, having high operational flexibility.

A further object of the present invention is that of providing a machine for forming a food product, preferably a biscuit, which guarantees a reduced duration of the downtime due to conveyor belt change operations.

A further object of the present invention is to provide a machine for forming a food product, preferably a biscuit, which guarantees simplified conveyor belt change operations.

The stated technical task and the specified objects are substantially achieved by a machine for forming a food product, preferably a biscuit, comprising the technical features set forth in one or more of the appended claims.

The dependent claims correspond to possible embodiments of the invention.

### Brief Description of the Figures

Further characteristics and advantages of the present invention will more fully emerge from the non-limiting description of a preferred but not exclusive embodiment of a machine for forming a food product, preferably a biscuit, as illustrated in the accompanying drawings, in which:
- figures 1A-1B are perspective views of a machine for forming a food product, preferably a biscuit, according to a possible embodiment of the present invention (rotary machine);
- figures 2A-2B are perspective views of a machine for forming a food product, preferably a biscuit, according to a further possible embodiment of the present invention (rotary moulder machine);
- figure 3 is a schematic diagram of a possible operating configuration of the machine for forming a food product, preferably a biscuit, of figures 1A-1B.

### Description of one or more preferred embodiments according to the present invention

With reference to the appended figures, the reference number 1 denotes in its entirety a machine for forming a food product, preferably a biscuit, which hereinafter will be referred to as machine 1.

The machine 1 comprises a support frame 2 and at least one moulding roller 3 activatable on a semi-processed food product to at least partially form the food product.

Furthermore, the machine 1 comprises a closed loop conveyor belt 4 movable along an advancement direction "A" for transporting at least one product at least between a first station "S1" and a second station "S2".

In particular, the conveyor belt 4 comprises at least one external surface 5 arranged in contact with the moulding roller 3 and adapted to support the product during the passage between the first station "S1" and the second station "S2".

The conveyor belt 4 further comprises at least one internal surface 6 opposite the external surface 5.

As illustrated in the appended figures, the machine 1 can comprise a motorized roller 7 mounted on the support frame and configured to move the conveyor belt 4 along the advancement direction "A".

Furthermore, the machine 1 comprises at least one pressure roller 8 arranged in contact with the internal surface 6 of the conveyor belt 4.

Preferably, the pressure roller 8 has at least one at least partially elastically deformable portion.

In particular, the pressure roller 8 may have a rubberised coating.

**The** pressure roller 8 is operatively opposing the moulding roller 3 and configured to exercise pressure towards the moulding roller 3 through the conveyor belt 4 interposed between them so as to stamp the food product on the external surface 5 of the conveyor belt 4.

Advantageously, the conveyor belt 4 may be at least partially made of cotton so as to promote the gripping of the product on the external surface 5 of the conveyor belt 4.

**The** pressure roller 8 is rotatably mounted on a structure 9 which is movable, with respect to the support frame 2, along an extraction direction "E" transverse, preferably orthogonal, with respect to the advancement direction "A" of the conveyor belt 4.

Preferably, the structure 9 is active on opposing ends of the pressure roller 8 for supporting it at least during a movement along the extraction direction "E".

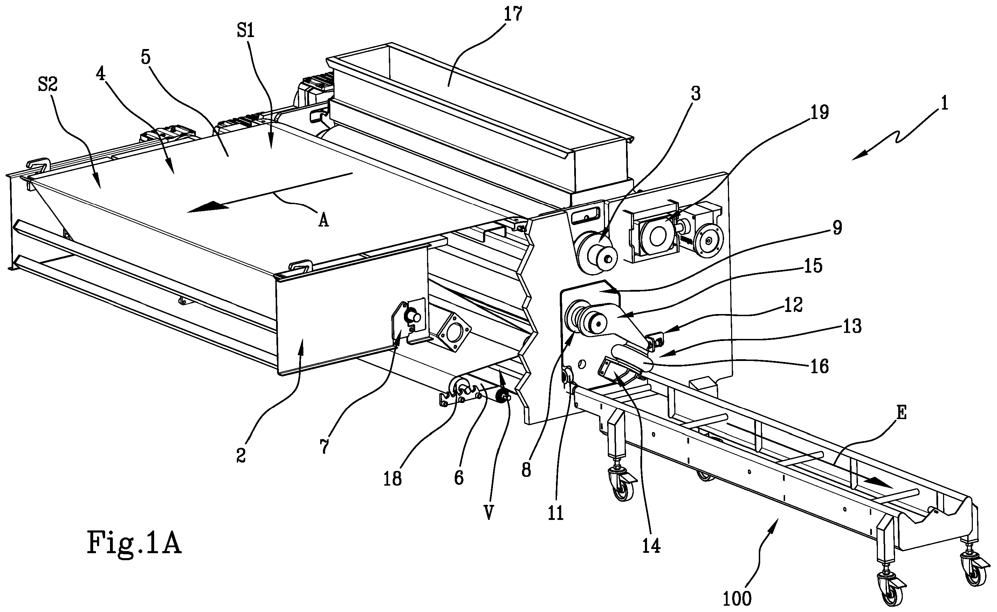

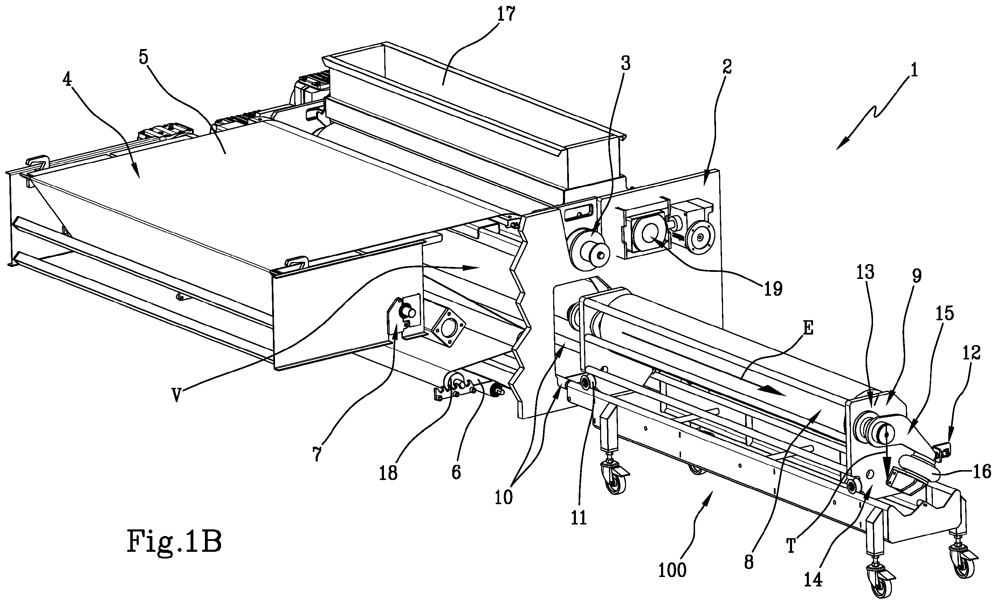

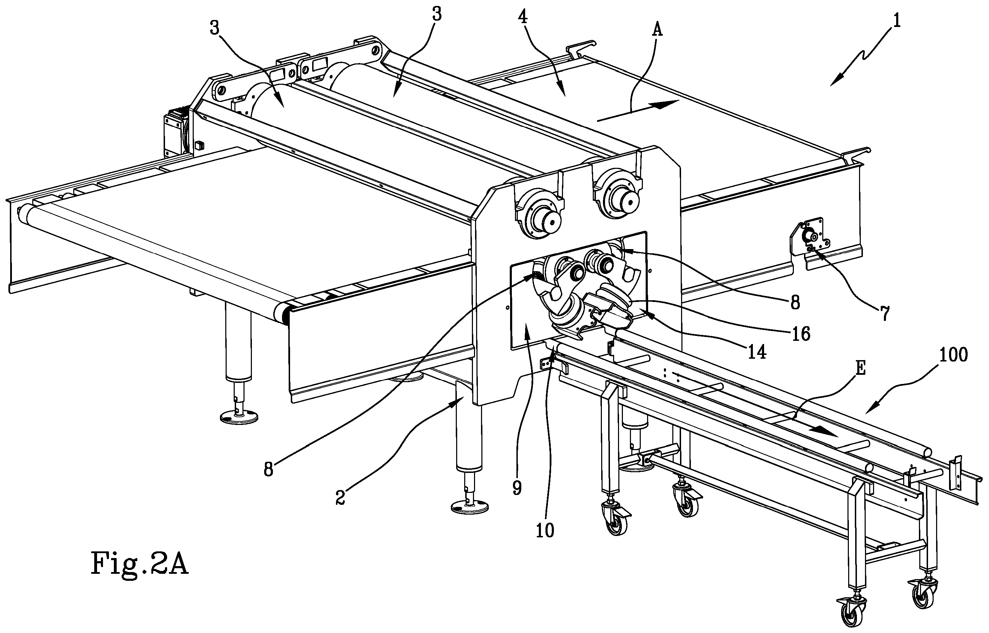

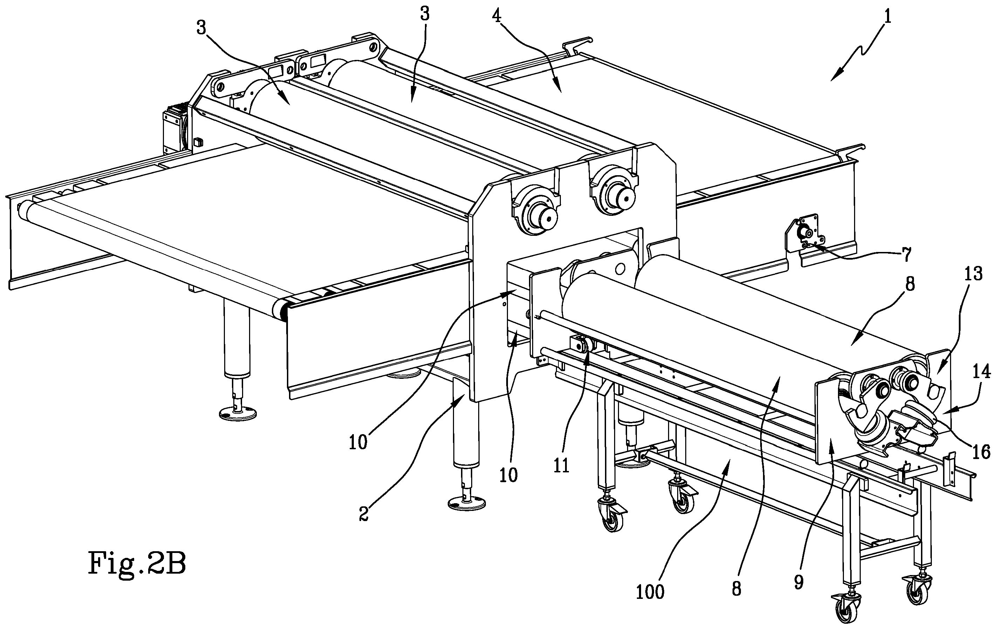

In particular, the structure 9 is reversibly movable between an inserted position (as shown in Figure 1A, 2A), in which the pressure roller 8 is active on the internal surface 6 of the conveyor belt 4, and an extracted position (Figure 1B, 2B), in which the pressure roller 8 is external with respect to a technical volume "V" defined by the inside of the conveyor belt 4.

In other words, the structure 9 enables the insertion and/or removal of the pressure roller 8 with respect to the technical volume "V" via a movement along the extraction direction "E".

Advantageously, the conveyor belt 4 may be wound only partially onto the pressure roller 8 so as to promote the movement of the pressure roller 8 along the extraction direction "E".

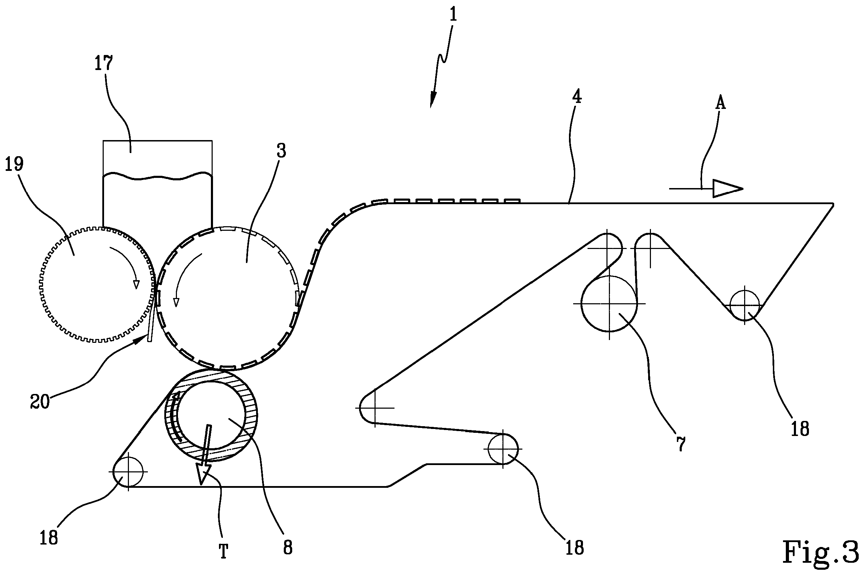

For example, the conveyor belt 4 may be in contact with the external surface of the pressure roller 8, for an arc of a circle less than 180°, preferably less than 90° (as illustrated in figure 3), limiting the surface in contact with the pressure roller 8 itself and promoting the relative sliding thereof.

According to a possible embodiment of the present invention and as shown in the appended figures, the extraction direction "E" preferably lies in a horizontal lying plane.

In this way, the structure 9 speeds up the conveyor belt 4 replacement operations thanks to increased extraction simplicity of the pressure roller 8. Furthermore, the structure 9 makes it possible to overcome the need for further lifting means, e.g. hoists, adapted to lift the pressure roller 8 to enable the replacement of the conveyor belt 4.

In this way, the structure 9 also increases the safety of the replacement operations and reduces the operating costs thereof as it overcomes the need for especially trained personnel.

Preferably, the structure 9 is reversibly slidable with respect to the support frame 2 along the extraction direction "E".

Preferably, the structure 9 is slidable in a "drawer" like manner with respect to the support frame 2.

Preferably, the structure 9 is slidable so as to be able to be extracted laterally with respect to the support frame, preferably with respect to lateral shoulders of said support frame 2.

Advantageously, the pressure roller 8 may be mounted idly on the structure 9 and not have any motorisation, making movement along the extraction direction "E" easier.

According to a possible embodiment and as shown in figures 2A, 2B, the structure 9 may be configured to support two or more forming rollers 8 for moving them with respect to the support frame 2 along the extraction direction "E".

Advantageously, the machine 1 can comprise self-coupling connection means (not illustrated in the figures) configured to connect at least the pressure roller 8 to the structure 9.

In this way, the machine 1 enables the conveyor belt 4 replacement procedures to be simplified and reduces the operating times thereof contributing to increasing the efficiency of the system.

Furthermore, the machine 1 can comprise a movement guide 10, fixed to the support frame 2, and a sliding block 11, connected to the structure 9. **In** particular, the sliding block 11 is slidably coupled to the movement guide 10 for moving the pressure roller 8 along the extraction direction "E".

According to further possible embodiments not illustrated in the appended figures, the movement guide 10 may be fixed to the structure 9 and the sliding block 11 may be fixed to the support frame 2 without altering the inventive concept underpinning the present invention.

Preferably, the movement guide 10 is arranged internally to the technical volume "V" defined inside the conveyor belt 4.

In particular, the movement guide 10 may be reversibly connectable to the support frame 2 so as to enable the removal thereof during the conveyor belt 4 replacement operations.

Furthermore, the machine 1 may comprise a movable guide 100 reversibly connectable to the movement guide 10 for supporting the structure 9 during an at least partial extraction condition with respect to the support frame 2.

Advantageously, the movable guide 100 may have self-centring connection means adapted to enable quick and simplified coupling with the movement guide 10.

Furthermore, the movable guide 100 may comprise movement means, e.g. a carriage, adapted to enable the arbitrary movement thereof.

Advantageously, the structure 9 may comprise a quick coupling means 12, for example comprising plugs and/or engagement connections and/or the like, reversibly activatable between the structure 9 and the support frame 2 for constraining and/or releasing the structure 9 with respect to the support frame 2.

In this way, the quick coupling means 12 enable the conveyor belt 4 replacement times to be reduced, thus also reducing the downtimes.

The machine 1 may further comprise an adjustment means 13 configured to at least partially modify an orientation of the pressure roller 8 guaranteeing high operating flexibility and adaptability to the machine 1.

According to a possible embodiment and as illustrated in the appended claims, the machine 1 may comprise a tensioning means 14 activatable on the pressure roller 8 to reversibly move it along a tensioning direction "T" between an operating position, in which the pressure roller 8 is active on the internal surface 6 of the conveyor belt 4 defining a tensioning condition of the conveyor belt 4, and a non-operating position, in which the pressure roller 8 is internal to the technical volume "V" and is not active on the internal surface 6 of the conveyor belt 4 defining a substantially slack condition of the conveyor belt 4.

In other words, the tensioning means 14 enables the pressure roller 8 to be moved reversibly in order to make the conveyor belt 4 more and/or less taut, thus facilitating the conveyor belt 4 replacement operations.

The aforesaid tensioning direction "T" may be transverse, preferably perpendicular, to the extraction direction "E".

For example, the tensioning means 14 may comprise an arm 15 adapted to support the pressure roller 8 and rotatably connected to the structure 9 so that the activation of the tensioning means 14 causes a rotation-translation of the pressure roller 8 between the operating position and the non-operating position.

Advantageously, the tensioning means 14 comprises a pneumatic suspension means 16, for example at least one torpress.

The pneumatic suspension means 16 guarantees a simplification of the conveyor belt 4 replacement procedures enabling an easier reversible connection with the respective supply means.

According to a possible embodiment and as shown in the appended figures, the tensioning means 14 comprises pneumatic suspension means 16 active on both ends of the pressure roller 8 guaranteeing high stability for the pressure roller 8 and marked precision in the movement of the pressure roller 8.

In particular, the activation of the pneumatic suspension means 16, preferably of the at least one torpress, generates a force which, advantageously amplified by the lever effect due to the arm 15, pushes the pressure roller 8 and, therefore, the conveyor belt 4, against the moulding roller 3.

The deactivation of the pneumatic suspension means 16, preferably of the at least one torpress, during the conveyor belt 4 change operation, causes the distancing of the pressure roller 8 from the moulding roller 3 which makes the movement of the structure 9 possible, together with the pneumatic suspension means 16, along the extraction direction "E".

Following the distancing of the pressure roller 8 from the moulding roller 3, the conveyor belt 4 is no longer "squashed" between the pressure roller 8 and the moulding roller 3, thus also being partially de-tensioned.

Preferably, the tensioning means 14 further comprise the aforesaid adjustment means 13.

The machine 1 may comprise a hopper 17 adapted to contain a semi-processed food product and dispense it at least to the moulding roller 3 for the at least partial forming of the product.

As illustrated in the appended figures 1A-1B, the machine 1 may further comprise a grooved roller 19 and a blade 20 operatively connected to the moulding roller 3 for promoting the forming of the product.

In particular, the grooved roller 19 operatively opposes the moulding roller 3 so that the semi-processed food product dispensed by the hopper 17 is substantially pressed by the grooved roller 19 against the moulding roller 3 in order to give it a predetermined shape. The blade is at least partially interposed between the moulding roller 3 and the grooved roller 19 to promote the introduction of the semi-processed food product inside relevant forming openings of the moulding roller 3 and a detachment of the same semi-processed food product from the grooved roller 19.

Furthermore, the machine 1 may comprise at least one return roller 18 reversibly connectable to the support frame 2 and active or activatable on the conveyor belt 4 for enabling adequate movement of the product throughout the operating steps of the machine 1.

It is thus observed that the present invention achieves the proposed objects by providing a closing tool for a machine for forming a food product, preferably a biscuit, able to simplify the conveyor belt change operations thanks to the presence of a structure movable with respect to said support frame, configured to move the pressure roller along an extraction direction transverse to the advancement direction of the conveyor belt between an inserted position and an extracted position.

Advantageously, the quick coupling means enable simple and quick coupling of the structure 9 to the support frame 2.

Advantageously, the pneumatic suspension means 16 enable cheap and efficient tensioning of the conveyor belt 4.

## Claims

1. A machine (1) for forming a food product, preferably a biscuit, comprising:
- a support frame (2);
- at least one moulding roller (3) activatable on a semi-processed food product to at least partially form the food product;
- a closed loop conveyor belt (4) movable along an advancement direction (A) for transporting at least one product at least between a first station (S1) and a second station (S2), said conveyor belt (4) comprising at least one external surface (5) arranged in contact with said moulding roller (3) and adapted to support the product during the passage between said first station (S1) and said second station (S2), and at least one internal surface (6) opposite said external surface (5);
- at least one pressure roller (8) arranged in contact with the internal surface (6) of said conveyor belt (4) and operatively opposing said moulding roller (3) and configured to exercise pressure towards said moulding roller (3) through said conveyor belt (4) interposed between them so as to stamp said food product on the external surface (5) of said conveyor belt (4);
**characterized in that** it comprises a structure (9) which is movable, with respect to said support frame (2), along an extraction direction (E) transverse, preferably orthogonal, with respect to said advancement direction (A) of the belt; said pressure roller (8) being rotatably mounted on said movable structure (9); said structure (9) being movable between an inserted position with respect to a technical volume (V) defined by the inside of the conveyor belt (4), in which said pressure roller (8) is active on the internal surface (6) of said conveyor belt (4), and an extracted position with respect to said technical volume (V), in which said pressure roller (8) is external with respect to said technical volume (V).

2. The machine according to claim 1, wherein said structure (9) is reversibly slidable with respect to said support frame (2) along said extraction direction (E).

3. **The** machine according to claim 1 or 2, comprising a movement guide, fixed to said support frame (2), and a sliding block (11), connected to said structure (9), said sliding block (11) being slidably coupled to said movement guide (10) for moving said pressure roller (8) along said extraction direction (E).

4. **The** machine according to claim 3, wherein said movement guide (10) is internal to the technical volume (V) defined by the inside of the conveyor belt (4).

5. **The** machine according to claim 3 or 4, comprising a movable guide (100) reversibly connectable to said movement guide (10) for supporting said structure (9) during an at least partial extraction condition of said structure (9) with respect to said support frame (2).

6. The machine according to one or more of the preceding claims, wherein said structure (9) comprises a quick coupling means (12) reversibly activatable for constraining and/or releasing said structure (9) with respect to said support frame (2).

7. The machine according to one or more of the preceding claims, comprising an adjustment means (13) configured to at least partially modify an orientation of said pressure roller (8).

8. The machine according to one or more of the preceding claims, comprising a tensioning means (14) activatable on said pressure roller (8) to reversibly move said pressure roller (8) along a tensioning direction (T) between an operating position, in which said pressure roller (8) is active on the internal surface (6) of said conveyor belt (4) defining a tensioning condition of said conveyor belt (4), and a non-operating position, in which said pressure roller (8) is internal to said technical volume (V) and is not active on the internal surface (6) of said conveyor belt (4) defining a substantially slack condition of said conveyor belt (4).

9. The machine according to claim 8, wherein said tensioning direction (T) is transverse, preferably perpendicular, to said extraction direction (E).

10. The machine according to claim 8 or 9, wherein said tensioning means (14) comprises a pneumatic suspension means (16), for example at least one torpress.

11. The machine according to one or more of the preceding claims, comprising at least one motorized roller (7) mounted on the support frame (2) and configured to move said conveyor belt (4) along said advancement direction (A).

12. The machine according to one or more of the preceding claims, wherein said pressure roller (8) has at least one at least partially elastically deformable portion, said pressure roller (8) having a rubberised coating.

13. The machine according to one or more of the preceding claims, wherein said pressure roller (8) is mounted idly on said structure (9) and does not have any motorization.

14. The machine according to one or more of the preceding claims, wherein said conveyor belt (4) is at least partially made of cotton, said conveyor belt (4) being seamless.

15. The machine according to one or more of the preceding claims, comprising a self-coupling connection means configured to connect at least said pressure roller (8) to said structure (9).

## Patentansprüche

1. Maschine (1) zur Herstellung eines Nahrungsmittels, vorzugsweise eines Kekses, umfassend:
- einen Stützrahmen (2);
- mindestens eine Formwalze (3), die auf einem halb verarbeiteten Nahrungsmittel aktivierbar ist, um das Nahrungsmittel zumindest teilweise herzustellen;
- ein Endlosförderband (4), das entlang einer Vorschubrichtung (A) bewegbar ist, um zumindest ein Produkt zumindest zwischen einer ersten Station (S1) und einer zweiten Station (S2) zu bewegen, wobei das Förderband (4) mindestens eine externe Oberfläche (5) umfasst, die in Kontakt mit der Formwalze (3) angeordnet und eingerichtet ist, um das Produkt während des Übergangs zwischen der ersten Station (S1) und der zweiten Station (S2) zu stützen, und mindestens eine interne Oberfläche (6), die der externen Oberfläche (5) entgegengesetzt ist,
- mindestens eine Druckwalze (8), die in Kontakt mit der internen Oberfläche (6) des Förderbands (4) angeordnet ist und der Formwalze (3) betriebswirksam entgegenwirkt und ausgelegt ist, um Druck hinführend zur Formwalze (3) durch das dazwischen eingesetzte Förderband (4) auszuüben, sodass das Nahrungsmittel auf der externen Oberfläche (5) des Förderbands (4) geprägt wird,
**dadurch gekennzeichnet, dass** sie eine Struktur (9) umfasst, die in Bezug auf den Stützrahmen (2) entlang einer Auszugsrichtung (E) quer, vorzugsweise rechtwinkelig, in Bezug auf die Vorschubrichtung (A) des Bands bewegbar ist, wobei die Druckwalze (8) drehbar auf der bewegbaren Struktur (9) montiert ist, wobei die Struktur (9) zwischen einer eingefügten Position in Bezug auf ein technisches Volumen (V), das durch die Innenseite des Förderbands (4) definiert ist, in der die Druckwalze (8) auf der internen Oberfläche (6) des Förderbands (4) aktiv ist, und einer ausgezogenen Position in Bezug auf das technische Volumen (V), in der die Druckwalze (8) außerhalb des technischen Volumens (V) liegt, bewegbar ist.

2. Maschine nach Anspruch 1, wobei die Struktur (9) reversibel in Bezug auf den Stützrahmen (2) entlang der Auszugsrichtung (E) verschiebbar ist.

3. Maschine nach Anspruch 1 oder 2, umfassend eine Bewegungsführung, die an dem Stützrahmen (2) fixiert ist, und einen Schiebeblock (11), der mit der Struktur (9) verbunden ist, wobei der Schiebeblock (11) verschiebbar mit der Bewegungsführung (10) gekuppelt ist, um die Druckwalze (8) entlang der Auszugsrichtung (E) zu bewegen.

4. Maschine nach Anspruch 3, wobei die Bewegungsführung (10) innerhalb des technischen Volumens (V), das durch die Innenseite des Förderbands (4) definiert ist, liegt.

5. Maschine nach Anspruch 3 oder 4, umfassend eine bewegbare Führung (100), die reversibel mit der Bewegungsführung (10) verbindbar ist, um die Struktur (9) während eines zumindest teilweisen Ausfahrzustands der Struktur (9) in Bezug auf den Stützrahmen (2) zu stützen.

6. Maschine nach einem oder mehreren der vorhergehenden Ansprüche, wobei die Struktur (9) Schnellkupplungsmittel (12) umfasst, die reversibel aktivierbar sind, um die Struktur (9) in Bezug auf den Stützrahmen (2) zu befestigen und/oder freizugeben.

7. Maschine nach einem oder mehreren der vorhergehenden Ansprüche, umfassend Einstellmittel (13), die ausgelegt sind, um eine Ausrichtung der Druckwalze (8) zumindest teilweise zu modifizieren.

8. Maschine nach einem oder mehreren der vorhergehenden Ansprüche, umfassend Spannmittel (14), die auf der Druckwalze (8) aktivierbar sind, um die Druckwalze (8) reversibel entlang einer Spannrichtung (T) zwischen einer Betriebsposition, in der die Druckwalze (8) auf der internen Oberfläche (6) des Förderbands (4) aktiv ist und die einen Spannzustand des Förderbands (4) definiert, und einer Nichtbetriebsposition, in der die Druckwalze (8) innerhalb des technischen Volumens (V) liegt und nicht auf der internen Oberfläche (6) des Förderbands (4) aktiv ist und einen im Wesentlichen gelockerten Zustand des Förderbands (4) definiert, zu bewegen.

9. Maschine nach Anspruch 8, wobei die Spannrichtung (T) quer, vorzugsweise senkrecht, zur Auszugsrichtung (E) verläuft.

10. Maschine nach Anspruch 8 oder 9, wobei die Spannmittel (14) pneumatische Federungsmittel (16), beispielsweise mindestens eine Luftfeder, umfassen.

11. Maschine nach einem oder mehreren der vorhergehenden Ansprüche, umfassend mindestens eine motorbetriebene Walze (7), die auf dem Stützrahmen (2) montiert und ausgelegt ist, um das Förderband (4) entlang der Vorschubrichtung (A) zu bewegen.

12. Maschine nach einem oder mehreren der vorhergehenden Ansprüche, wobei die Druckwalze (8) mindestens einen zumindest teilweise verformbaren Abschnitt aufweist, wobei die Druckwalze (8) eine gummierte Beschichtung aufweist.

13. Maschine nach einem oder mehreren der vorhergehenden Ansprüche, wobei die Druckwalze (8) leerlaufend auf der Struktur (9) montiert ist und keinen Motorantrieb aufweist.

14. Maschine nach einem oder mehreren der vorhergehenden Ansprüche, wobei das Förderband (4) zumindest teilweise aus Baumwolle besteht, wobei das Förderband (4) nahtlos ist.

15. Maschine nach einem oder mehreren der vorhergehenden Ansprüche, umfassend Selbstkupplungsmittel, die ausgelegt sind, um die mindestens eine Druckwalze (8) mit der Struktur (9) zu verbinden.

## Revendications

1. Machine (1) pour former un produit alimentaire, de préférence un biscuit, comprenant :
- un bâti de support (2) ;
- au moins un rouleau de moulage (3) activable sur un produit alimentaire semi-transformé pour former au moins partiellement le produit alimentaire ;
- une bande transporteuse en boucle fermée (4) mobile le long d'une direction d'avancement (A) pour transporter au moins un produit entre un premier poste (S1) et un second poste (S2), ladite bande transporteuse (4) comprenant au moins une surface externe (5) agencée en contact avec ledit rouleau de moulage (3) et adaptée pour supporter le produit pendant le passage entre ledit premier poste (S1) et ledit second poste (S2), et au moins une surface interne (6) opposée à ladite surface externe (5) ;
- au moins un rouleau de pression (8) agencé en contact avec la surface interne (6) de ladite bande transporteuse (4) et opposé de manière opérationnelle audit rouleau de moulage (3) et configuré pour exercer une pression vers ledit rouleau de moulage (3) à travers ladite bande transporteuse (4) interposée entre eux de manière à emboutir ledit produit alimentaire sur la surface externe (5) de ladite bande transporteuse (4) ;
**caractérisée en ce qu'**elle comprend une structure (9) qui est mobile, par rapport audit bâti de support (2), le long d'une direction d'extraction (E) transversale, de préférence orthogonale, par rapport à ladite direction d'avancement (A) de la bande ; ledit rouleau de pression (8) étant monté de manière rotative sur ladite structure mobile (9) ; ladite structure (9) étant mobile entre une position insérée par rapport à un volume technique (V) défini par l'intérieur de la bande transporteuse (4), dans laquelle ledit rouleau de pression (8) est actif sur la surface interne (6) de ladite bande transporteuse (4), et une position extraite par rapport audit volume technique (V), dans laquelle ledit rouleau de pression (8) est externe par rapport audit volume technique (V).

2. Machine selon la revendication 1, dans laquelle ladite structure (9) est coulissante de manière réversible par rapport audit bâti de support (2) le long de ladite direction d'extraction (E).

3. Machine selon la revendication 1 ou 2, comprenant un guide de mouvement, fixé audit bâti de support (2), et un bloc coulissant (11), relié à ladite structure (9), ledit bloc coulissant (11) étant couplé de manière coulissante audit guide de mouvement (10) pour déplacer ledit rouleau de pression (8) le long de ladite direction d'extraction (E).

4. Machine selon la revendication 3, dans laquelle ledit guide de mouvement (10) est interne au volume technique (V) défini par l'intérieur de la bande transporteuse (4).

5. Machine selon la revendication 3 ou 4, comprenant un guide mobile (100) pouvant être relié de manière réversible audit guide de mouvement (10) pour supporter ladite structure (9) pendant une condition d'extraction au moins partielle de ladite structure (9) par rapport audit bâti de support (2).

6. Machine selon une ou plusieurs des revendications précédentes, dans laquelle ladite structure (9) comprend des moyens de couplage rapide (12) activables de manière réversible pour contraindre et/ou libérer ladite structure (9) par rapport audit bâti de support (2).

7. Machine selon une ou plusieurs des revendications précédentes, comprenant des moyens de réglage (13) configurés pour modifier au moins partiellement une orientation dudit rouleau de pression (8).

8. Machine selon une ou plusieurs des revendications précédentes, comprenant des moyens de tension (14) activables sur ledit rouleau de pression (8) pour déplacer de manière réversible ledit rouleau de pression (8) le long d'une direction de tension (T) entre une position de fonctionnement, dans laquelle ledit rouleau de pression (8) est actif sur la surface interne (6) de ladite bande transporteuse (4) définissant une condition de tension de ladite bande transporteuse (4), et une position de non-fonctionnement, dans laquelle ledit rouleau de pression (8) est interne audit volume technique (V) et n'est pas actif sur la surface interne (6) de ladite bande transporteuse (4) définissant une condition substantiellement lâche de ladite bande transporteuse (4).

9. Machine selon la revendication 8, dans laquelle ladite direction de tension (T) est transversale, de préférence perpendiculaire, à ladite direction d'extraction (E).

10. Machine selon la revendication 8 ou 9, dans laquelle lesdits moyens de tension (14) comprennent des moyens de suspension pneumatique (16), par exemple au moins un Torpress.

11. Machine selon une ou plusieurs des revendications précédentes, comprenant au moins un rouleau motorisé (7) monté sur le bâti de support (2) et configuré pour déplacer ladite bande transporteuse (4) le long de ladite direction d'avancement (A).

12. Machine selon une ou plusieurs des revendications précédentes, dans laquelle ledit rouleau de pression (8) a au moins une portion au moins partiellement déformable de manière élastique, ledit rouleau de pression (8) ayant un revêtement caoutchouté.

13. Machine selon une ou plusieurs des revendications précédentes, dans laquelle ledit rouleau de pression (8) est monté libre sur ladite structure (9) et n'a pas de motorisation.

14. Machine selon une ou plusieurs des revendications précédentes, dans laquelle ladite bande transporteuse (4) est au moins partiellement fabriquée en coton, ladite bande transporteuse (4) étant continue.

15. Machine selon une ou plusieurs des revendications précédentes, comprenant des moyens de liaison à auto-couplage configurés pour relier au moins ledit rouleau de pression (8) à ladite structure (9).
